# EUROPEAN PATENT APPLICATION

(11) **EP 2 591 956 A2**
(43) Date of publication of application: **15.05.2013**
(21) Application number: 12003335.2
(22) Date of filing: 15.04.2004
(51) Int. Cl.: B60R 22/28, B60R 22/36

(54) **Seat belt retractor**

(30) Priority: 15.04.2003 JP 2003110068; 31.07.2003 JP 2003283373; 12.12.2003 JP 2003414607
(62) Divisional of application: 04008985.6
(71) Applicant: Takata Corporation, Tokyo 106-8510 (JP)
(72) Inventor: Hiramatsu, Koji, Tokyo 107-8508 (JP)
(74) Representative: Schwarz, Markku

(57) **Abstract**

To provide a seat belt retractor (1) that meets the recent needs and can optimize the energy absorption characteristics easily the retractor (1) has a spool (4) for winding a seat belt (3), a torsion bar (5) formed of material that can be twisted and deformed, a locking mechanism (7) for preventing the spool (4) from rotating at least in the direction of unwinding the seat belt (3), a ring (19) disposed inside an end portion of the spool (4), and a plate member (20) which can be twisted and deformed. A first end (20a) of the plate member (20) is fixed to the periphery of the ring (19). A second end (20b) of the plate member (20) is engaged with the internal surface of the thick cylinder portion (4b) of the spool (4) so as to be capable of being disengaged.

## Description

### [Technical Field]

The present invention relates to a seat belt retractor for retracting a seat belt webbing. More specifically, the present invention relates to a seat belt retractor having an EA mechanism for absorbing inertial energy applied to an occupant when the seat belt is locked to restrain the displacement of the occupant in an emergency.

### [Background Art]

A seat belt device provided in a seat of vehicle is an indispensable device as a device to restrain sudden displacement of an occupant due to deceleration occurring in collision of vehicles and to protect the safety of the occupant's body.

Generally, this seat belt device is composed of a webbing (belt), a retractor, a buckle unit and so on.

The retractor winds the webbing around a wind member (a bobbin or a spool) and retracts the webbing into the inside with a spring force. At the time of collision when impact is made, the retractor prevents the winding member from unwinding the webbing. The webbing prevented from being unwound restrains the occupant's body displaced forward suddenly. However, when the forward displacement of the occupant is suddenly restrained as mentioned above, impact force due to reaction of the restraint is applied to the occupant's chest via the webbing. A technique to ease the impact force applied to the occupant is known (for example, see Japanese Patent No. 2875505). In this technique, just after locking, a certain or more resistance against unwinding is imposed on the webbing to maintain a predetermined tension load of the webbing, and the webbing is unwound to a predetermined length. In this way, the collision energy applied to the occupant is absorbed (Energy Absorption; hereinafter referred to as "EA").

In this related art, a shaft is disposed rotatably inside the spool around which the webbing is wound, a locking mechanism that can lock unwinding the webbing by preventing the shaft from rotating is provided, and an energy absorbing member (EA plate) that can be deformed plastically is disposed between the spool and the shaft. In an emergency, when a shaft is locked by the locking mechanism so as not to rotate, the tension of webbing restraining the occupant who starts to be displaced forward due to inertia acts as the force for rotating the spool relative to the shaft in the direction of unwinding the webbing. When this relative rotational force becomes a certain value or more, an EA plate is deformed plastically and wound around the shaft in the direction of unwinding the webbing. The collision energy is absorbed by the plastic deformation resistance. In this way, despite operation of the locking mechanism, the spool rotates gradually, the webbing is unwound with a certain or more tension, and the force acting between the webbing and the occupant is eased.

### [Problems to be solved by the Invention]

However, the above-mentioned related art has the following problems.

Generally, impact at the time of collision is different from structure to structure of a vehicle. Therefore, in order to protect an occupant's body sufficiently, it is necessary to optimize the energy absorption characteristics such as the load when the energy absorbing mechanism starts to operate (energy absorption load: tension of the webbing when energy absorption starts), deformation extent at the time of impact absorption (length of the unwound webbing) according to difference in structure of the vehicle. Consequently, in connection with an entire retractor, it is required to optimize the energy absorption characteristics flexibly and to increase design freedom.

In the above-mentioned related art, it is not considered to optimize the impact energy absorbed by the EA plate, and no concrete structure and technique to enable this are disclosed. Consequently, it is difficult to meet the above-mentioned needs, that is to say, to optimize the energy absorption characteristics.

Accordingly, it is an object of the present invention to provide a seat belt retractor that meets the recent needs and can optimize the energy absorption characteristics easily.

In EP 1 180 457 A2, a webbing retractor with a force limiter mechanism is described. The webbing retractor comprises a spool for winding the webbing and a wire provided as an energy absorbing member. The wire has a fixing portion, a curved portion and a fit-in portion. When the spool rotates in a pull-out direction relative to a lock base, the fit-in portion is forcibly pulled from a fit-in hole of the spool and deformed. This known webbing retractor essentially corresponds to the preamble of independent claim 1.

### [Means for Solving the Problems]

This object is achieved by a seat belt retractor according to claim 1. The dependent claims define preferred and advantageous embodiments of the invention.

To attain the above-mentioned object, the seat belt retractor includes a rotational substantially cylinder-shaped member for winding a seat belt; a shaft member provided inside the substantially cylinder-shaped member; a plate fitting member disposed inside an end portion of the substantially cylinder-shaped member and connected to an end of the shaft member rotatably together therewith; a locking mechanism preventing the shaft member from rotating in the direction of unwinding the seat belt; and a plate member capable of being deformed plastically, one end of which is fixed to the periphery of the plate fitting member, and the other end of which is engaged with the internal surface of the end portion of the substantially cylinder-shaped member.

The seat belt retractor preferably has the shaft member provided inside the substantially cylinder-shaped member rotatably relative thereto; the plate member disposed so as to be deformed plastically by rotational force transmitted when the substantially cylinder-shaped member and the shaft rotate relative to each other. One end of the shaft member is connected to the substantially cylinder-shaped member so that the shaft member is capable of rotating together therewith and being twisted and deformed. The plate fitting member is connected to the other end of the shaft member so as to rotate together therewith inside an end portion of the substantially cylinder-shaped member. One end of the plate member is fixed to the periphery of the plate fitting member, and the other end of the plate member is engaged with the internal surface of the substantially cylinder-shaped member.

Therefore, a shaft member that can be twisted and deformed is disposed inside the substantially cylinder-shaped member for winding the seat belt, and a plate member that can be deformed plastically is disposed between the external surface of the plate fitting member connected to the shaft member rotatably together therewith and the internal surface of the substantially cylinder-shaped member.

In an emergency, when the plate fitting member is prevented from rotating in the direction of unwinding the seat belt, tension of the seat belt (webbing) restraining the occupant who starts to be displaced forward due to inertia acts as the force rotating the substantially cylinder-shaped member relative to the shaft member in the direction of unwinding the webbing. Since the shaft member can be twisted and deformed, when the substantially cylinder-shaped member rotates a fixed angle or more, the shaft member is first deformed plastically by the twist force due to the relative rotation, and collision energy is absorbed by plastic deformation resistance at this time. With this movement, the plate member provided between the plate fitting member and the substantially cylinder-shaped member which rotate relative to each other is deformed plastically and wound, for example, around the plate fitting member in the direction of unwinding the webbing. Further collision energy is absorbed by plastic deformation resistance at this time. As described above, both plastic deformation of the shaft member and plastic deformation of the plate member function as an EA mechanism. Entire EA load is the sum of EA load when the shaft member is twisted and deformed and EA load when the plate member twines around the plate fitting member.

At this time, the energy absorption load and energy absorption period concerning the shaft member can be optimized by determining the quality of materials, thickness, and so on of the shaft member. However, the energy absorption load and energy absorption period concerning the plate member can be optimized easier. That is to say, (a) increasing (or decreasing) the radial thickness of a ring space formed between the plate fitting member and the substantially cylinder-shaped member makes it possible to increase (or decrease) the load; (b) increasing (or decreasing) the thickness of the plate member makes it possible to increase (or decrease) the load; and (c) the load characteristics can be optimized by determining the position in the circumferential direction where the plate member is engaged with the substantially cylinder-shaped member and thereby determining the relative rotation stroke characteristics when the plate member twines.

In the known structure in which the EA plate is provided between the spool and the shaft therein, it is difficult to optimize the load by applying the above-mentioned technique to the EA plate.

In the above-mentioned related art, the EA plate is directly fitted to the middle of the shaft and disposed in a limited narrow space between the shaft and spool. Therefore, it is difficult to increase the radial thickness of the ring space between the shaft and the spool as mentioned above in (a). On the contrary, in the first and second inventions, one end of the plate member is fixed not to the shaft member but to the periphery of the plate fitting member provided at one end of the shaft member, and the other end of the plate member is engaged not with the middle but with one end of the internal surface of the substantially cylinder-shaped member. Therefore, the radial thickness of the ring space is optimized by determining the diameter of the plate fitting member independently of the diameter of the shaft member.

In the above-mentioned known structure, since the ring space is limited, it is difficult to increase the thickness of EA plate as described in (b) above. (If a thick plate is used in the limited space, twining by plastic deformation is difficult.) On the contrary, in the present invention, the radial thickness of the ring space can be determined freely. Therefore, it is easy to increase the thickness of the plate member.

In the above-mentioned known structure, the engaging position of the EA plate to the spool is in the middle portion in the axial direction. However, the middle portion of the spool is for winding the webbing and provided with a webbing-fixing structure (see FIG. 6 of Japanese Patent No. 2875505). Therefore, the engaging position of the EA plate with the spool in the circumferential direction is limited by the webbing-fixing structure and cannot be determined freely. On the contrary, in the present invention, the plate member is engaged with the end of the substantially cylinder-shaped member. Therefore, the engaging position of the plate member with the substantially cylinder-shaped member in the circumferential direction is not limited by the webbing-fixing structure and can be determined freely.

As described above, in the present invention, the energy absorption load and energy absorption period can be optimized by determining the radial thickness of the ring space between the plate fitting member and the substantially cylinder-shaped member, the thickness of the plate member, and the position where the plate member is engaged with the substantially cylinder-shaped member. By combining this with sharing of energy absorption between the shaft member and the plate member, the energy absorption characteristics of the entire retractor is easily optimized. Therefore, it is possible to meet the recent needs, to optimize the energy absorption characteristics easily according to difference in structure of vehicles, and to protect occupant's body sufficiently.

According to the invention, the substantially cylinder-shaped member has a main cylinder portion for winding the seat belt and a thick cylinder portion having an external diameter which is larger than that of the main cylinder portion. The plate fitting member preferably is substantially disk-shaped. A first end of the plate member is fixed to the periphery of the plate fitting member, and a second end of the plate member is engaged with the internal surface of the thick cylinder portion.

In this embodiment, a thick cylinder portion is formed at one end of the substantially cylinder-shaped member, and the ring space for disposing the plate member is formed between the internal surface of the thick cylinder portion and the periphery of the plate fitting member. Therefore, it is avoided to increase the diameter of the entire substantially cylinder-shaped member to accommodate the plate fitting member and the plate member, and the retractor is compact.

The recent vehicles are equipped with an SRS (Supplemental Restraint System) airbag system which is inflated in an emergency, cushions the occupant, and thus protects the occupant's body. The airbag system and the seat belt device cooperate to improve the safety of occupant. When such an SRS airbag system is equipped, role is shared between the airbag system and the seat belt device to maximize the effects of the airbag system safely. In early stages of the collision, that is to say, until the occupant comes into contact with the inflated airbag, the seat belt device ensures a large energy absorption load to minimize the displacement of the occupant. In late stages of the collision, that is to say, after the airbag starts to cushion the occupant, the seat belt device decreases the energy absorption load and leaves the airbag system to protect the occupant.

In this embodiment, energy absorption load in the late stages of collision is decreased. Therefore, it is suitable for role sharing with the SRS airbag system and can prevent the seat belt from applying excessive restraining force to the occupant in the late stages of collision.

According to a further embodiment of the invention, the disk-shaped plate fitting member has a thin portion, the radius of the thin portion being smaller than that of the other portion, the plate member twining around the thin portion so that the distance between the plate member and the thick cylinder portion is longer than a prior one.

In this embodiment, when the plate member twines around the thin portion of the plate fitting member, the distance between the plate member and the thick cylinder portion is longer than a prior one. In this way, the energy absorption load can be smaller than a prior one.

According to a further embodiment of the invention, the plate member has a narrow portion having a width smaller than that of the other portion at the second end.

The plate member is deformed plastically from one end sequentially and twines around the plate fitting member. In the narrow portion, strength of the plate member is smaller than that of the other portion. Therefore, when the narrow portion at the other end is deformed plastically in the last stage, the load necessary for plastic deformation is smaller than before. In this way, the energy absorption load can be smaller than a prior one.

According to the invention, the thick cylinder portion of the substantially cylinder-shaped member has a projection projecting toward the inside. The plate member is disposed so that the second end is in contact with the projection.

In this structure, one end of the plate member is in contact with and is engaged with the projection inside the thick cylinder portion, and the plate member is deformed plastically when the plate fitting member and the substantially cylinder-shaped member rotate relative to each other.

The projection preferably has an end face for contact in the circumferential direction and the plate member is disposed so that the second end is in contact with the end face for contact.

In this embodiment, the second end of the plate member is in contact with and is engaged with the end face for contact of the projection in the circumferential direction inside the thick cylinder portion. The plate member is biased by the end face of the projection and is deformed plastically when the plate fitting member and the substantially cylinder-shaped member rotate relative to each other.

Preferably, the projection has an end face for contact in the direction of rotation of the substantially cylinder-shaped member relative to the plate fitting member and the plate member is disposed so that the second end is in contact with the end face for contact to be biased in the direction of the relative rotation until a predetermined time after the substantially cylinder-shaped member starts to rotate relative to the plate fitting member, and so that the second end separates from the end face for contact after the predetermined time.

In this structure, the second end of the plate member is in contact with and is engaged with the end face for contact of the projection formed on the side in the direction of relative rotation of the plate fitting member inside the thick cylinder portion. The plate member is biased by the end face of the projection in the direction of the relative rotation and is deformed plastically when the plate fitting member and the substantially cylinder-shaped member rotate relative to each other. After the predetermined time, the second end of the plate member separates from the end face for contact of the projection, and collision energy absorption by the plate member is stopped.

### [Effects of the Invention]

In the present invention, the energy absorption characteristics of the entire retractor are easily optimized. Therefore, it is possible to meet the recent needs, to optimize the energy absorption characteristics easily according to difference in structure of vehicles, and to protect an occupant's body sufficiently.

### [Best Mode for Carrying Out the Invention]

An embodiment of the present invention will now be described with reference to the drawings.

### [Brief Description of the Drawings]

FIG. 1 is a longitudinal sectional view schematically showing an overall structure of a seat belt retractor of an embodiment.
FIG. 2 is a cross-sectional view taken along line II-II of FIG. 1 showing a detailed fitting structure of a plate member.
FIG. 3 is a perspective view showing the fitted plate member of FIG. 2.
FIG. 4 shows the behavior of the plate member deformed plastically by the relative rotation between a spool and a torsion bar to absorb the collision energy.
FIG. 5 shows the behavior of the plate member disengaged from the spool by the further progress of the relative rotation between the spool and the torsion bar.
FIG. 6 is a graph showing a variation of the EA load when the EA mechanism composed of the torsion bar and the plate member absorbs the collision energy.
FIG. 7 shows an example of determining the radial thickness A of the ring space between a thick cylinder portion of the spool and a ring.
FIG. 8 is a graph showing a variation of the EA load when the EA mechanism composed of the torsion bar and the plate member absorbs the collision energy in the example shown in FIG. 7.
FIG. 9 shows an example of varying the width of the plate member.
FIG. 10 shows a modification concerning the engaging structure of the plate member.

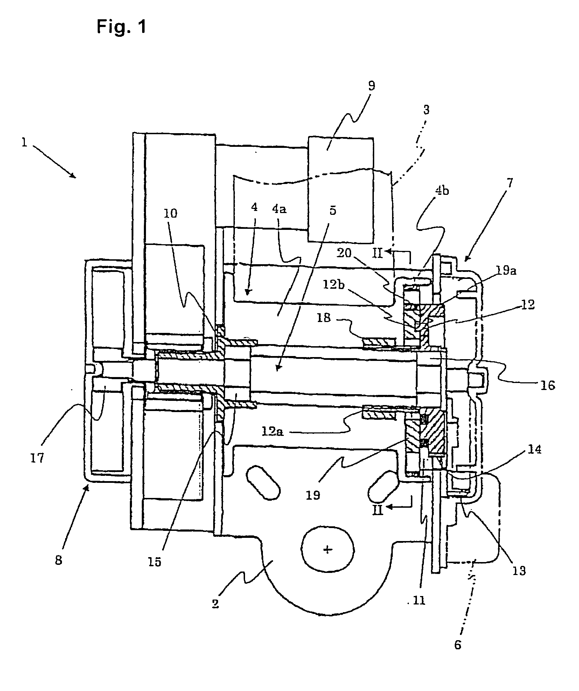

FIG. 1 is a longitudinal sectional view schematically showing an overall structure of a seat belt retractor of this embodiment.

As shown in FIG. 1, the retractor 1 has a frame 2, a spool (a substantially cylinder-shaped member) 4 for winding a seat belt 3, a torsion bar 5 (a shaft member) formed of material that can be twisted and deformed, deceleration sensing means 6 which operates when it senses a large deceleration of vehicle occurring in an emergency, a locking mechanism 7 for preventing the spool 4 from rotating at least in the direction of unwinding the seat belt 3, spring means 8 having a spiral spring (not shown), a pre-tensioner 9 which operates in the emergency and generates belt winding torque, and a bush 10 for transmitting the belt winding torque of the pre-tensioner 9 to the spool 4.

The locking mechanism 7 has a locking base 12 which holds a pawl 11 rockably, and has a locking gear 13. The locking gear 13 rotates together with the torsion bar 5 during normal operation and stops in an emergency by operation of the deceleration sensing means 6 to make a rotational difference relative to the torsion bar 5, thereby engaging the pawl 11 with the internal teeth 14 in the side wall of the frame 2. Consequently, the locking base 12 (in other words, the spool 4) is prevented from rotating in the direction of unwinding the seat belt 3. Although detailed illustration is omitted, when the seat belt 3 is withdrawn suddenly, the locking base 12 of the locking mechanism 7 also rotates in the direction of unwinding the seat belt 3 relative to the locking gear 13. In this way, the seat belt 3 is prevented from being withdrawn as described above.

The torsion bar 5 is disposed so as to be inserted axially into the inside of the spool 4. The torsion bar 5 has a torque transmitting portion (a second torque transmitting portion) 15, which is located at one end (left in FIG. 1) and engaged with the spool 4 so that it is not capable of rotating relative to the spool 4, and another torque transmitting portion (a first torque transmitting portion) 16, which is located at the other end (right in FIG. 1) and engaged with the locking base 12 so that it is not capable of rotating relative to the locking base 12 (in other words, supported by the locking base 12 so that it is capable of rotating together with the locking base 12), and functions as a connector connecting the spool 4 with the locking mechanism 7 rotatably.

The spool 4 has a main cylinder portion 4a and a thick cylinder portion whose diameter is larger than that of the main cylinder portion 4a, and supported rotatably between both side walls of the frame 2. By the spring force of the spring means 8, the spool 4 is urged constantly in the direction of winding the seat belt 3, via the bush 17, the torsion bar 5, the second torque transmitting portion 15 of the torsion bar 5, and the bush 10. As a result of such a structure, a first end (the left end in FIG. 1) of the torsion bar 5 is connected with the spool 4 rotatably together therewith. When the pre-tensioner 9 is in operation, the belt-winding torque produced in the pre-tensioner 9 is transmitted to the spool 4 via the bush 10. The spool 4 winds the seat belt 3 to a predetermined length.

A ring-shaped relative rotation locking member 18 is disposed between the spool 4 and the shaft portion 12a of the locking base 12. This relative rotation locking member 18 has a female thread (not shown) on the inner peripheral surface. The shaft portion 12a of the locking base 12 has a male thread (not shown). The relative rotation locking member 18 is screwed on the shaft portion 12a of the locking base 12, and fitted into the axial hole of the spool 4 so as not to rotate relatively and to move axially. When the spool 4 rotates relative to the locking base 12 in the direction of unwinding the seat belt 3, the relative rotation locking member 18 rotates together with the spool 4 and moves to the right in FIG. 1.

As the most remarkable feature of this embodiment, a ring 19 (plate fitting member) and a plate member 20 that can be deformed plastically are disposed inside the right end in FIG. 1 of the spool 4.

The ring 19 is substantially disk-shaped, and the torsion bar 5 is inserted into the center of the ring 19. An engaging projection 12b formed on the left side in FIG. 1 of the locking base 12 is fitted into an engaging recess 19a formed on the right side in FIG. 1 of the ring 19. In this way, the ring 19 is connected to the locking base 12 so as to rotate together with the torsion bar 5 via the locking base 12.

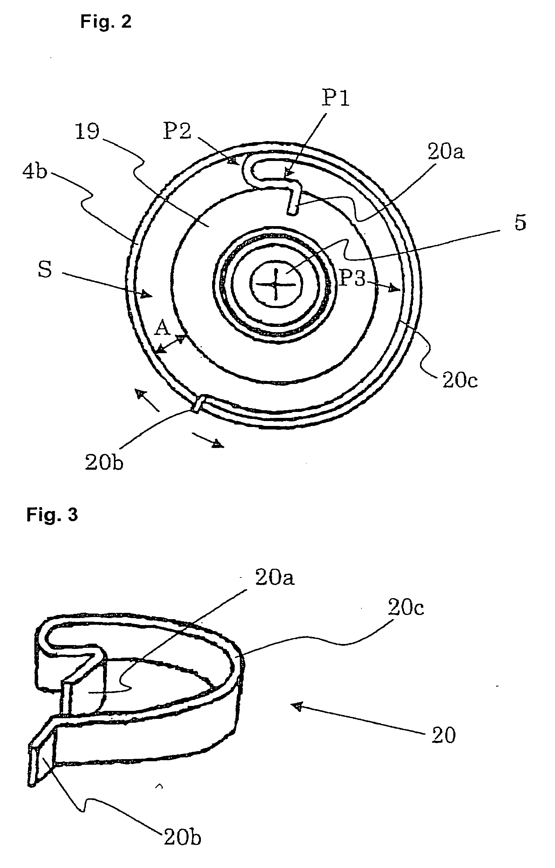

FIG. 2 is a cross-sectional view taken along line II-II of FIG. 1 showing a detailed fitting structure of the plate member 20. FIG. 3 is a perspective view showing the fitted plate member 20 of FIG. 2.

In connection with the fitted plate member 20 shown in FIGS. 2 and 3, a first end 20a (the nearer end to the center of the ring 19 and the spool 4) is fixed to the periphery of the ring 19. On the other hand, a second end 20b (the farther end from the center of the ring 19 and the spool 4) is engaged with the internal periphery of the thick cylinder portion 4b of the spool 4. More specifically, the second end 20b penetrates the thick cylinder portion 4b from inside to outside. The second end 20b can be disengaged from the thick cylinder portion 4b (the details will be described below). A middle portion 20c is located between the first end 20a and the second end 20b. In the shown initial state (before the energy absorption state described below), the middle portion 20c extends around the external periphery of the ring 19 in the direction of unwinding the seat belt 3 (counterclockwise in FIG. 2) to form an external extending segment (P1 in FIG. 2). Then, the middle portion 20c makes a U-turn to form a U-turn segment (P2 in FIG. 2) in a ring space S which is formed between the ring 19 and the thick cylinder portion 4b and whose radial thickness is A. After making a U-turn, the middle portion 20c extends along the internal periphery of the thick cylinder portion 4b in the direction of winding the seat belt 3 (clockwise in FIG. 2) to form an internal extending segment (P3 in FIG. 2). In this example, the second end 20b to which the middle portion 20c leads is located in the substantially opposite side of the center (apart 180 degrees) from the first end 20a.

The following description relates to an operation of the retractor 1 of this embodiment.

### (I) During normal operation

When the seat belt 3 is not worn, the seat belt 3 is retracted completely by the urging force of the spring means 8. When the seat belt 3 is withdrawn in normal speed for wearing, the spool 4 rotates in the direction of unwinding the seat belt 3, and the seat belt 3 is withdrawn smoothly. After a tongue (not shown) which is slidably fitted to the withdrawn seat belt 3 is inserted into and engaged with a buckle unit (not shown) fixed to the auto body, a portion of the seat belt 3 that is withdrawn to excess is wound around the spool 4 by the urging force of the spring means 8. In this way, the seat belt 3 is fitted to the occupant without inflicting a feeling of pressure.

### (II) In an emergency

In an emergency, seat belt winding torque produced by the pre-tensioner 9 is transmitted to the spool 4. The spool 4 winds the seat belt 3 to a predetermined length to restrain the occupant quickly. On the other hand, the deceleration sensing means 6 is activated by the large deceleration occurring in the emergency, preventing the locking gear 13 from rotating in the direction of unwinding the seat belt 3. Then the pawl 11 of the locking mechanism 7 is turned to be engaged with the internal teeth 14 of the frame 2. Then, since the locking base 12 and the torsion bar 5 are prevented from rotating in the direction of unwinding the seat belt, tension of the seat belt 3 restraining the occupant who starts to be displaced forward due to inertia acts as rotational force of the spool 4 relative to the torsion bar 5 in the direction of unwinding the seat belt, the torsion bar 5 is twisted, and the spool 4 alone rotates in the direction of unwinding the seat belt relatively.

When the spool 4 rotates relative to the torsion bar 5 a fixed angle or more, the torsion bar 5 is first deformed plastically by the twist force due to the relative rotation, and collision energy is absorbed by plastic deformation resistance at this time. With this movement, the plate member 20 provided between the ring 19 rotating together with the locking base 12 and the spool 4 rotating relative to the ring 19 is deformed plastically, and wound, for example, around the ring 19 in the direction of unwinding the seat belt 3. Further collision energy is absorbed by plastic deformation resistance at this time.

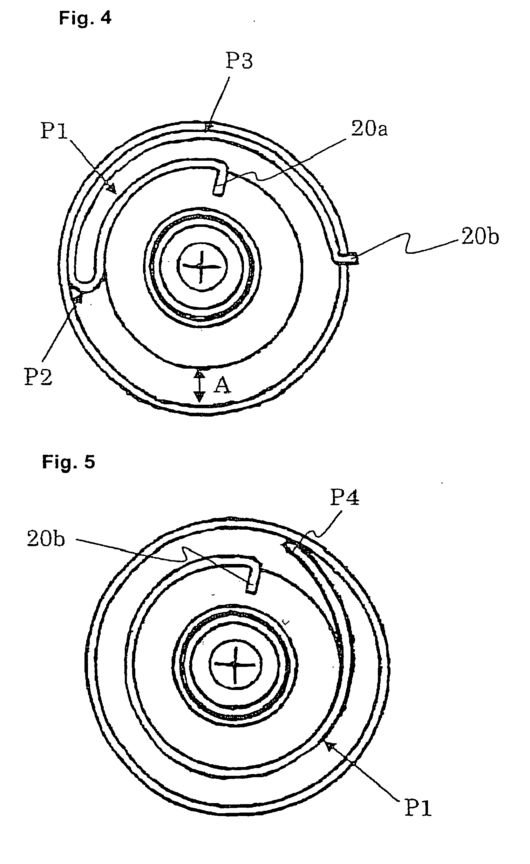

FIG. 4 shows this behavior (for convenience, the twist rotation of the torsion bar 5 is not shown). As shown in FIG. 4, with the progress of twining of the plate member 20 by the rotation (counterclockwise in FIG. 4) of the spool 4 relative to the torsion bar 5, the external extending segment (P1) extends, and the U-turn segment (P2) is displaced in the direction of unwinding the seat belt 3. In other words, the segment where the largest deformation is performed is sequentially displaced in the direction of unwinding the seat belt 3. According to this, the internal extending segment (P3) shortens, and the angle between the first end 20a and the second end 20b decreases.

FIG. 5 shows the further progress of the relative rotation (the twist rotation of the torsion bar 5 is not shown). As shown in FIG. 5, with the progress of twining of the plate member 20 by the rotation (counterclockwise in FIG. 4) of the spool 4 relative to the torsion bar 5, the external extending segment (P1) extends further. At last the second end 20b is disengaged from the thick cylinder portion 4b and functions as a free end (P4). The U-turn segment (P2) and the internal extending segment (P3) disappear.

As described above, in this embodiment, when the spool 4 rotates relative to the torsion bar 5 in the direction of unwinding the seat belt 3 and twists the torsion bar 5, both plastic deformation of the torsion bar 5 and plastic deformation of the plate member 20 function as an energy absorption mechanism (EA mechanism). The entire EA load is the sum of EA load when the torsion bar 5 is twisted and deformed and EA load when the plate member 20 twines around the plate fitting member. By twist torque when the torsion bar 5 is deformed plastically and by plastic deformation of the plate member 20, impact energy applied to the occupant is absorbed and eased, and the load applied to the seat belt 3 is restricted.

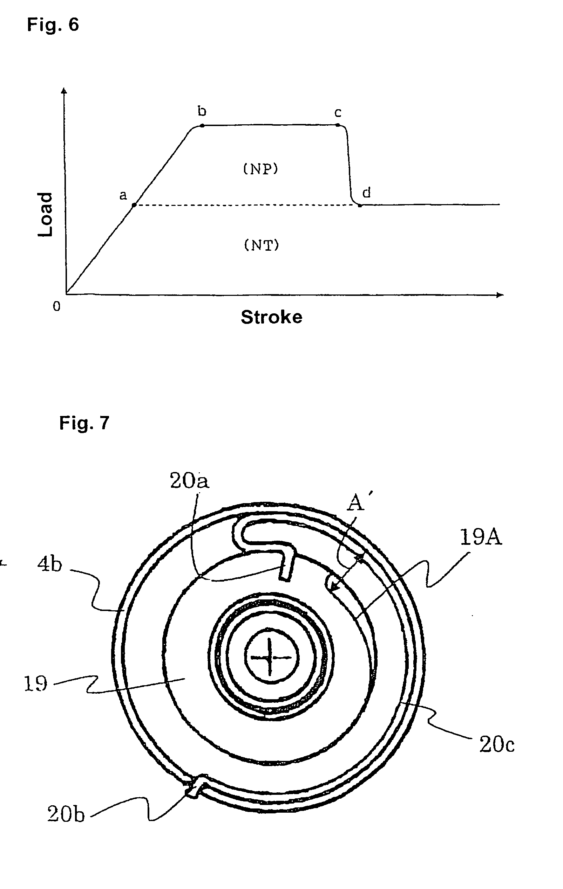

FIG. 6 is a graph showing a variation of the counter load (hereinafter referred to as "EA load") generated in the EA mechanism composed of the torsion bar 5 and the plate member 20 when energy is absorbed as described above. The horizontal axis shows stroke (angle) of rotation of the spool 4 relative to the locking base 12.

In FIG. 6, the value of EA load is zero when the stroke of rotation of the spool 4 relative to the locking base 12 is zero. Then, when the relative rotation described above starts and the stroke starts to increase, as described above, EA load by twist of the torsion bar 5 first increases proportionally. When the stroke increases to be a value (point a in FIG. 6), as described above, plastic deformation of the plate member starts in addition to twist of the torsion bar 5. The entire EA load is the sum of EA load by the torsion bar 5 (shown with "NT" in FIG. 6) and EA load by the plate member 20 (shown with "NP" in FIG. 6). When the stroke increases further, the sum of EA loads of the entire retractor 1 stops increasing at a fixed value (point b in FIG. 6). After that, despite increase of stroke, the EA load maintains the fixed value (point b to point c in FIG. 6). The state shown in FIG. 4 corresponds to this state.

When the stroke increases further and the second end 20b is disengaged from the thick cylinder portion 4b (see FIG. 5), the EA load of the entire retractor 1 drops sharply (point c to point d in FIG. 6) because EA load is no longer generated by the plate member 20 and generated by the torsion bar 5 alone (NT). After that, despite increase of stroke, the EA load maintains the dropped value (the right from point d in FIG. 6).

In this embodiment, the stroke is limited by the relative rotation locking member 18. That is to say, with the rotation of the spool 4 relative to the locking base 12 in the direction of unwinding the seat belt 3, the relative rotation locking member 18 moves to the right in FIG. 1. When the relative rotation locking member 18 reaches the end of the male thread, it is prevented from moving further to the right. Therefore, the rotation is locked. The relative rotation locking member 18 stops rotating relative to the locking base 12. That is to say, the spool 4 is prevented from rotating in the direction of unwinding the seat belt 3, the seat belt 3 is not withdrawn, and the occupant is prevented from being displaced due to inertia to be protected.

This embodiment has the following advantages.

### (1) Optimizing the energy absorption characteristics

In this embodiment, the energy absorption characteristics of the entire retractor 1 are easily optimized. Therefore, it is possible to meet the recent needs, to optimize the energy absorption characteristics easily according to difference in structure of vehicles, and to protect the occupant's body sufficiently. This advantage will be described in detail with reference to FIGS. 7 to 9.

As described above, in the retractor 1 of this embodiment, when the spool 4 rotates relative to the torsion bar 5 in the direction of unwinding the seat belt 3 and twists the torsion bar 5, the entire energy absorption load is the sum of energy absorption load when the torsion bar 5 is deformed plastically and energy absorption load when the plate member 20 twines around the plate fitting member.

At this time, the energy absorption load and energy absorption period concerning the torsion bar 5 can be optimized by determining the materials, thickness, and so on of the torsion bar 5. However, the energy absorption load and energy absorption period concerning the plate member 20 can be optimized easier. The technique for that will be described step by step.

### (A) Determining the radial thickness of the ring space S

In the above-mentioned related art, the EA plate is directly fitted to the middle of the shaft and disposed in a limited narrow space between the shaft and spool. Therefore, it is difficult to increase the radial thickness of the ring space between the shaft and the spool.

On the contrary, in the retractor 1 of this embodiment, the first end 20a of the plate member 20 is fixed not to the torsion bar 5 but to the periphery of the ring 19 provided at one end of the torsion bar 5, and the second end 20b of the plate member 20 is engaged not with the middle of the spool 4 but with the thick cylinder portion 4b at one end of the spool 4. Therefore, the radial thickness A of the ring space S is optimized by determining the diameter of the ring 19 independently of the diameter of the torsion bar 5. (Needless to say, the internal diameter of the thick cylinder portion 4b of the spool 4 may be increased or decreased.) For example, if the radial thickness A of the ring space S is increased (or decreased), the curvature radius of the U-turn segment (P2) is increased (or decreased). Therefore, it is easy to increase (or decrease) the EA load.

FIG. 7 shows an example of determining the radial thickness A of the ring space S, and comparable to FIG. 2. The same reference characters will be used to designate the same portions as those in FIG. 2, so that the description thereof will be omitted. As shown in FIG. 7, the ring 19 of this example has a thin portion 19A whose radius is smaller than that of the other portion and forming a recess. The thin portion 19A may be provided entirely in the axial direction. When the plate member 20 twines around the thin portion 19A, the distance between the plate member 20 and the thick cylinder portion 4b is longer than a prior one. In this way, the energy absorption load can become smaller than a prior one.

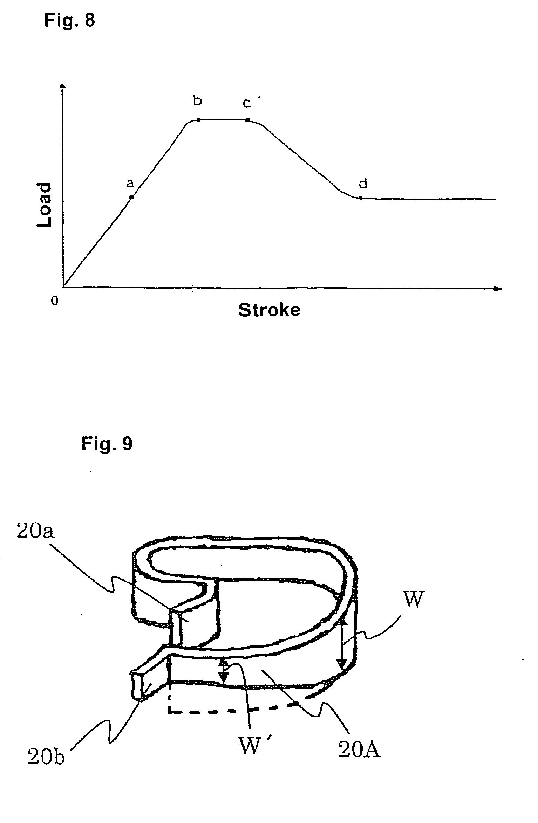

FIG. 8 is a graph showing a variation of EA load in this case, and comparable to FIG. 6. The same reference characters will be used to designate the same portions as those in FIG. 6, so that the description thereof will be omitted.

As shown in FIG. 8, before the plate member 20 twines around the thin portion 19A, value of EA load is the same as in FIG. 6 (the origin 0 to point c' through point a and point b). According to increase of the stroke, the plate member 20 enters the thin portion 19A (point c') and twines around the thin portion 19A. As the stroke increases and the plate member 20 twines around the thin portion 19A, the distance (A' in FIG. 7) between the plate member 20 and the thick cylinder portion 4b increases gradually. Accordingly, the curvature radius of the U-turn segment (P2) increases gradually. In this way, the EA load can be decreased gradually (the right from point c' in FIG. 8). Finally, the second end 20b is disengaged from the thick cylinder portion 4b (point d).

### (B) Determining the thickness of the plate member 20

In the above-mentioned known structure, since the ring space is limited, it is difficult to increase the thickness of EA plate. (If a thick plate is used in the limited space, twining by plastic deformation is difficult.)

On the contrary, in the retractor 1 of this embodiment, the radial thickness A of the ring space S can be determined freely as described above. Therefore, it is easy to increase EA load by increasing the thickness of the plate member 20 to enhance the rigidity. It is also easy to decrease EA load by decreasing the thickness to reduce the rigidity.

As a technique similar to this rigidity control by determining the plate thickness, the width of the plate member 20 may be varied. FIG. 9 shows a plate member 20 whose width W is varied. In this example, the plate member 20 has a narrow portion 20A in the vicinity of the second end 20b. The width W' of the narrow portion 20 is smaller than the width W of the other portion. (Accordingly, the width of the second end 20b is also smaller.) In the narrow portion 20A, strength of the plate member 20 is smaller than that of the other portion. Therefore, when the plate member 20 is deformed from the first end sequentially and twines around the ring 19 as shown in FIG. 4, and the narrow portion 20A is deformed plastically in the late stage, the load necessary for plastic deformation is smaller than a prior one. In this way, the energy absorption load can become smaller than a prior one.

As shown in FIG. 9, especially in this example, the width W' of the narrow portion 20A decreases gradually toward the second end 20b. Therefore, the EA load characteristics are the same as in FIG. 8. (In this case, point c' to point d in FIG. 8 corresponds to the narrow portion 20A.)

### (C) Determining the engaging position of the second end 20b of the plate member 20

In the above-mentioned known structure, the engaging position of the EA plate with the spool is in the middle portion in the axial direction. However, the middle portion of the spool is for winding the webbing and provided with a webbing-fixing structure (see FIG. 6 of Japanese Patent No. 2875505). Therefore, the engaging position of the EA plate with the spool in the circumferential direction is limited by the webbing-fixing structure and cannot be determined freely.

On the contrary, in the retractor 1 of this embodiment, the engaging position of the plate member 20 with the spool 4 is in the thick cylinder portion 4b at the end of the spool 4. Therefore, the engaging position of the plate member 20 with the spool 4 in the circumferential direction is not limited by the webbing-fixing structure and can be determined freely. Therefore, it is possible to reduce the energy absorption period (the horizontal axis) shown in FIGS. 6 and 8 by moving the engaging position of the second end 20b of the plate member 20 counterclockwise in FIG. 2 to decrease the stroke when the second end 20b of the plate member 20 twines around the ring 19. It is also possible to extend the energy absorption period by moving the engaging position of the plate member 20 clockwise in FIG. 2 to increase the stroke when the plate member 20 twines around the ring 19. In this way, the EA load characteristics can be optimized.

As described in (A) to (C) above, the EA load and energy absorption period of the retractor 1 of this embodiment are easily optimized. By combining this with sharing of energy absorption between the torsion bar 5 and the plate member 20, the energy absorption characteristics of the entire retractor 1 is easily optimized. Therefore, it is possible to meet the recent needs, to optimize the energy absorption characteristics easily according to difference in structure of vehicles, and to protect the occupant's body sufficiently.

Needless to say, in addition to using the techniques of (A) to (C), determining an appropriate material of the plate member 20 makes it possible to optimize the energy absorption characteristics more flexibly.

### (2) Effect of disengagement of the plate member 20

In the retractor 1 of this embodiment, as described above with reference to FIG. 5, the second end 20b of the plate member 20 is disengaged from the thick cylinder portion 4b in the late stage of collision. Then, collision energy absorption by the plate member 20 stops. Therefore, after that, it is possible to make the torsion bar 5 alone absorb the energy as shown in FIG. 6. Consequently, in addition to the effect described in (1) above, the collision energy absorption load and energy absorption period of the entire retractor 1 can be determined more freely and optimized flexibly.

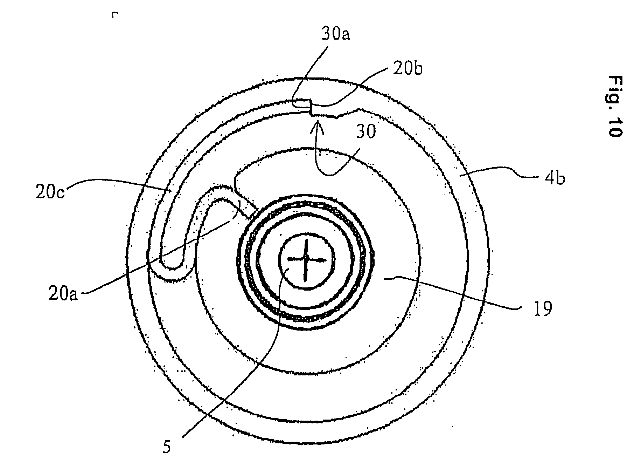

From this perspective, as shown in FIG. 10, the thick cylinder portion 4b of the spool 4 may be provided with a projection 30 projecting from the internal surface, and the second end 20b of the plate member 20 may be in contact with the projection 30. In the example of FIG. 10, the second end 20b of the plate member 20 is not L-shape as in the above-mentioned examples but straight. The projection 30 has an end face 30a with which the second end 20b is in contact on one side in the circumferential direction (the left side in FIG. 10, that is to say, the side in the direction of rotation of the spool 4 relative to the torsion bar 5). When the relative rotation starts, the second end 20b is biased by the surface 30a in the direction of the relative rotation, and the plate member 20 is deformed and wound around the ring 19 in the direction of unwinding the seat belt 3 as described with reference to FIG. 4. According to further progress of the relative rotation, the second end 20b is separated from the surface 30a to be separated from the thick cylinder portion 4b.

Such a structure enables the plate member 20 to be separated from the thick cylinder portion 4b more smoothly and enables the plate member 20 to stop absorbing the collision energy compared with the case shown in FIG. 2, in which the second end 20b of the plate member 20 is L-shape and penetrates the thick cylinder portion 4b from inside to outside.

To decrease energy absorption load in the last stage as described above is of the following significance.

The recent vehicles are equipped with an SRS (Supplemental Restraint System) airbag system which is inflated in an emergency, cushions the occupant, and thus protects the occupant's body. The airbag system and the seat belt device cooperate to improve the safety of occupant. When such an SRS airbag system is equipped, role is shared between the airbag system and the seat belt device to maximize the effects of the airbag system safely. In early stages of the collision, that is to say, until the occupant comes into contact with the inflated airbag, the seat belt device ensures a large energy absorption load to minimize the displacement of the occupant. In late stages of the collision, that is to say, after the airbag starts to cushion the occupant, the seat belt device decreases the energy absorption load and leaves the airbag system to protect the occupant.

In this embodiment, energy absorption load in the late stages of collision is decreased. Therefore, it is suitable for role sharing with the SRS airbag system and can prevent the seat belt from applying excessive restraining force to the occupant in the late stages of collision.

### (3) Complement

In this embodiment, a thick cylinder portion 4b is formed at one end of the spool 4, and a ring space S for disposing the plate member 20 is formed between the internal surface of the thick cylinder portion 4b and the periphery of the ring 19. Therefore, it is avoided to increase the diameter of the entire spool 4 to accommodate the ring 19 and the plate member 20, and the retractor 1 is compact.

## Claims

1. A seat belt retractor comprising:
a rotational substantially cylinder-shaped member (4) for winding a seat belt (3);
a shaft member (5) provided inside the substantially cylinder-shaped member (4);
a plate fitting member (19) disposed inside an end portion of the substantially cylinder-shaped member and connected to an end of the shaft member (5) rotatably together therewith;
a locking mechanism (7) preventing the shaft member from rotating in the direction of unwinding the seat belt; and
a plate member (20) capable of being deformed plastically, one end of which is fixed to the periphery of the plate fitting member (19), and the other end of which is engaged with the internal surface of the end portion of the substantially cylinder-shaped member (5),
wherein the substantially cylinder-shaped member (4) has a main cylinder portion (4a) for winding the seat belt (3) and a thick cylinder portion (4b) having an external diameter which is larger than that of the main cylinder portion (4a);
the plate fitting member (19) is substantially disk-shaped;
**characterized in that** a first end of the plate member (20) is fixed to the periphery of the plate fitting member (19), and a second end of the plate member (20) is engaged with the internal surface of the thick cylinder portion (4b),
wherein the thick cylinder portion (4b) of the substantially cylinder-shaped member (4) has a projection (30) projecting toward the inside; and
the plate member (20) is disposed so that the second end is in contact with the projection (30).

2. A seat belt retractor according to Claim 1,
wherein the projection (30) has an end face (30a) for contact in the circumferential direction; and
the plate member (20) is disposed so that the second end is in contact with the end face (30a) for contact.

3. A seat belt retractor according to Claim 1 or 2,
wherein the projection (30) has an end face (30a) for contact in the direction of rotation of the substantially cylinder-shaped member (4) relative to the plate fitting member (19); and
the plate member (20) is disposed so that the second end is in contact with the end face (30a) for contact to be biased in the direction of the relative rotation until a predetermined time after the substantially cylinder-shaped member (4) starts to rotate relative to the plate fitting member (19), and so that the second end separates from the end face (30a) for contact after the predetermined time.

4. A seat belt retractor according to any one of the preceding claims,
wherein the shaft member (5) is provided inside the substantially cylinder-shaped member (4) rotatably relative thereto,
wherein the plate member (20) is disposed so as to be deformed plastically by rotational force transmitted when the substantially cylinder-shaped member (4) and the shaft member (5) rotate relative to each other,
wherein one end of the shaft member (5) is connected to the substantially cylinder-shaped member (4) so that the shaft member (5) is capable of rotating together therewith and being twisted and deformed, and
wherein the plate fitting member (19) is connected to the other end of the shaft member (5) so as to rotate together therewith inside an end portion of the substantially cylinder-shaped member (4).

5. A seat belt retractor according to any one of the preceding claims,
wherein the disk-shaped plate fitting member (19) has a thin portion (19A), the radius of the thin portion being smaller than that of the other portion, the plate member (20) twining around the thin portion (19A) so that the distance between the plate member (20) and the thick cylinder portion (4b) is longer than a prior one.

6. A seat belt retractor according to any one of the preceding claims,
wherein the plate member (20) has a narrow portion (20A) having a width smaller than that of the other portion at the second end.
